Europäisches Patentamt

European Patent Office

Office européen des brevets

(11) Veröffentlichungsnummer: **0 502 389 A2**

# EUROPÄISCHE PATENTANMELDUNG

(21) Anmeldenummer: **92103020.1**

(22) Anmeldetag: **22.02.92**

(51) Int. Cl.5: **B32B  27/40**, B32B 5/20

(30) Priorität: **02.03.91 DE 4106659**

(43) Veröffentlichungstag der Anmeldung:
**09.09.92 Patentblatt  92/37**

(84) Benannte Vertragsstaaten:
**CH DE ES FR GB IT LI SE**

(71) Anmelder: **ELASTOGRAN POLYURETHANE GMBH**
**Landwehrweg**
**W-2844 Lemförde(DE)**

(72) Erfinder: **Denker, Ernst**
**Heinrich-Schulte-Strasse 18**
**W-4535 Westerkappeln(DE)**
Erfinder: **Reisinger, Gerhard**
**Amtmannstrasse 7**
**W-8195 Egling 2(DE)**

(74) Vertreter: **Karau, Wolfgang, Dr. et al**
**BASF Aktiengesellschaft Carl-Bosch-Strasse 38**
**W-6700 Ludwigshafen(DE)**

(54) **Verfahren zur Herstellung von Kraftfahrzeug-Innenverkleidungen o. dgl.**

(57) Das Verfahren zur Herstellung von Kraftfahrzeug-Innenverkleidungen mit einer Haut aus Polyurethanmaterial und einem glasfaserverstärkten Polyurethanträger, die gemeinsam in einer Form hinterschäumt werden, arbeitet so, daß zuerst getrennt der Träger (4) aus einer im Verhältnis zur fertigen Innenverkleidung kontur- und maßgenau geschnittenen Glasfasermatte durch Tränken mit Polyurethanmaterial mit einem überstehenden Randabschnitt (6) nur aus diesem Polyurethanmaterial hergestellt wird. Die Haut (12) wird dann in die Unterform (11) mit einem in der Trennebene (16) überstehenden Rand (15) eingelegt. Anschließend wird der getrennt hergestellte Polyurethanträger in der Oberform mit dem nur aus Polyurethanmaterial hergestellten Randabschnitt in der Trennebene eingelegt. Es erfolgt das Hinterschäumen von Träger und Haut durch Einfüllen des Polyurethanmaterials in die offene Form. Die Form wird geschlossen, wobei der Randabschnitt (6) des getrennt hergestellten Trägers in der Trennebene (6) in Kontakt mit der Haut eine Dichtung bildet. Anschließend wird nach Öffnen der Form der Formling entnommen. Wenn in einer geschlossenen Form gearbeitet wird, dann wird die Form selbstverständlich erst geschlossen und dann das Polyurethanmaterial in die geschlossene Form eingefüllt. Der Randabschnitt, der nur aus Polyurethanmaterial besteht, wird von dem Endprodukt abgeschnitten, so daß Abfall nur aus Polyurethanmaterial entsteht, der wiederverwertbar ist. Gleichzeitig bildet der Randabschnitt beim Hinterschäumen eine Dichtung, die verhindert, daß Polyurethanmaterial beim Hinterschäumen auf die Außenfläche der Haut gelangt.

FIG.2

Die Erfindung betrifft ein verfahren zur Herstellung von Kraftfahrzeug-Innenverkleidungen o. dgl. mit einer Haut aus Polyurethanmaterial und einem glasfasermattenverstärkten Polyurethanträger, die gemeinsam in einer Form hinterschäumt werden.

Derartige Verfahren sind in den unterschiedlichsten Ausgestaltungen bekannt. Es werden Träger aus unterschiedlichen Materialien auch aus Metall eingesetzt. Je nach Art des Trägers ist dessen Herstellungsverfahren unterschiedlich.

Von Seiten der Automobilindustrie werden immer höhere Anforderungen an die Umweltverträglichkeit der eingesetzten Materialien und damit an die Möglichkeit gestellt, diese Materialien wiederzuverwenden. Kunststoffmaterial läßt sich insbesondere dann gut wiederverwenden, wenn es aus einem Kunststoff oder aus einer Kunststoffamilie besteht. Eine solche Familie sind beispielsweise die hier angesprochenen Polyurethane.

Hochwertige Kraftfahrzeug-Innenverkleidungen bestehen aus einer im Fahrzeug sichtbaren Haut, einem Träger, der für die Formstabilität sorgt und einer Hinterschäumung und einer Hinterschäumung zwischen Haut und Träger, um einen "soft touch" zu erreichen.

Der Erfindung liegt nun die Aufgabe zugrunde, ein Verfahren der eingangs genannten Art zu schaffen, bei dem wiederverwertbare Abfälle entstehen, die nur aus einer Materialfamilie bestehen, wobei gleichzeitig beim Hinterschäumen für eine gute Abdichtung gesorgt werden soll, d.h. es soll kein Polyurethanmaterial beim Hinterschäumen auf die Außenfläche der Haut gelangen.

Diese Aufgabe wird durch die Verfahrensschritte a bis g der Ansprüche 1 oder 2 gelöst, je nach dem, ob in eine offene Form (Anspruch 1) oder eine geschlossene Form (Anspruch 2) eingefüllt wird.

Erfindungsgemäß wird also getrennt ein Träger hergestellt, der aus einer kontur- und maßgenauen Glasfasermatte besteht, die durch Ausschäumen mit Polyurethanmaterial getränkt ist. Seitlich steht ein Randabschnitt über, der aber kein Glas sondern nur Polyurethanmaterial enthält. Dieser Randabschnitt kann vom Endprodukt abgeschnitten werden, so daß dieser Abfall nur aus Polyurethanmaterial besteht und als solcher wiederverwertbar ist. Gleichzeitig bildet dieser Randabschnitt beim Hinterschäumen eine Dichtung, die verhindert, daß Polyurethanmaterial beim Hinterschäumen auf die Außenfläche der Haut gelangt.

Wenn nach dem Hinterschäumen durch Einfüllen in die offene Form diese geschlossen wird, dann bildet der nur aus Polyurethanmaterial bestehende Randabschnitt, des vorher hergestellten Trägers eine Dichtung in der Trennebene der Form. Dieser Randabschnitt wird zusammen mit dem entsprechenden, überstehenden Rand der Haut, die ebenfalls aus Polyurethanmaterial besteht, von dem Formling abgeschnitten. Es ist eine leichte und wirtschaftliche Wiederverwertung dieses Abfalls möglich. Gleichzeitig bildet der Randabschnitt eine einfache und wirksame Dichtung.

Wenn in einer geschlossenen Form hinterschäumt wird, dann wird die Form vor dem Einfüllen des Polyurethanmaterials geschlossen, wobei der Randabschnitt des vorher hergestellten Trägers wiederum die gewünschte Dichtung bildet.

Wenn nach dem erfindungsgemäßen Verfahren gearbeitet wird, entsteht als Abfall sortenreines Polyurethan ohne Glas. Glasabfall entsteht nur beim Zuschneiden der Glasfasermatte. Da beim Beschneiden des Endproduktes lediglich Polyurethan und kein Glas geschnitten werden muß, erhöht sich die Standzeit der Schneidewerkzeuge.

Erfindungsgemäß wird also ein glasfasermattenverstärkter Polyurethanträger verwendet, wobei die Abmessungen der Glasfasermatten den Abmessungen des Fertigproduktes entsprechen, so daß lediglich ein Randabschnitt, nämlich der Dichtrand, übersteht, der nur aus Polyurethanmaterial gefertigt ist.

Im folgenden wird die Erfindung unter Hinweis auf die Zeichnung näher erläutert.

Es zeigt:

Fig. 1 einen schematischen Querschnitt durch eine Form zur getrennten Herstellung des Trägers; und

Fig. 2 einen schematischen Querschnitt durch eine Form zur Herstellung einer Kraftfahrzeug-Innenverkleidung.

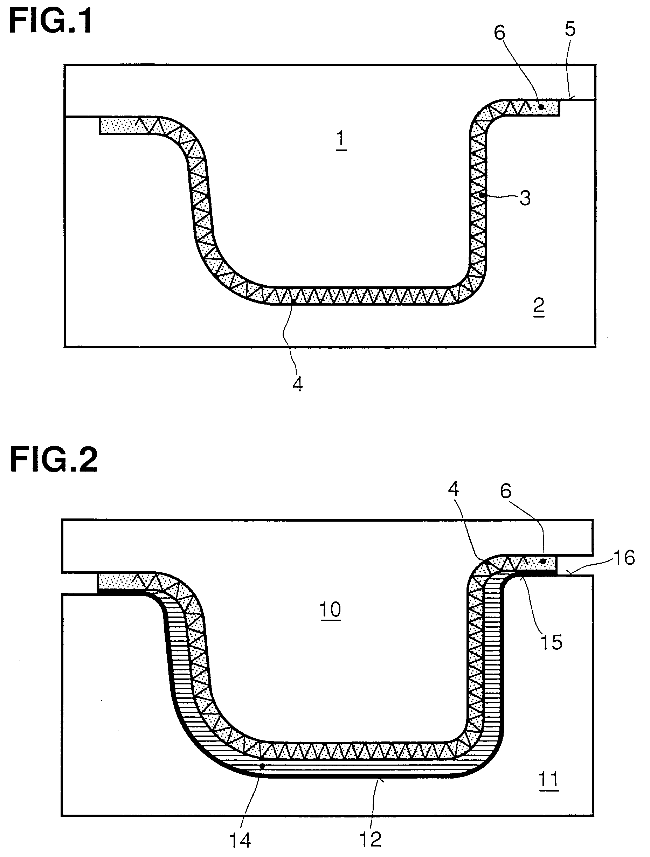

Die in Fig. 1 dargestellte Form zur Herstellung des Trägers besteht aus einem Formoberteil 1 und einem Formunterteil 2. Zwischen diesen befindet sich ein Formhohlraum 3, in den eine im voraus kontur- und maßgenau zugeschnittene Glasfasermatte eingelegt ist. In dem Formhohlraum bleibt außen ein Randteil frei, in dem keine Glasfasermatte liegt. Nach dem Ausschäumen oder Tränken der Glasfasermatte 4 entsteht hier ein Randabschnitt 6, der nur aus Polyurethanmaterial besteht, also kein Glas enthält. Die Trennebene der Form ist mit 5 bezeichnet.

Die in Fig. 2 dargestellte eigentliche Form zur Herstellung der Kraftfahrzeug-Innenverkleidung ist grundsätzlich ähnlich aufgebaut. Sie besteht aus einer Oberform 10 und einer Unterform 11. Die Trennebene ist mit 16 bezeichnet.

In dieser Form wird der im voraus hergestellte Träger 4 mit seinem glasfreien Randabschnitt 6 eingelegten und zwar durch Befestigen an der Oberform. In die Unterform wird die Haut 12 aus Polyurethanmaterial eingelegt. Ein Rand 15 steht über und deckt sich mit dem Randabschnitt 6 des Trägers. Der Rand 15 und der Randabschnitt 6 liegen in der Trennebene 16.

Zur Hinterschäumung wird das Polyurethanmaterial in die so vorbereitete offene Form eingefüllt und bildet die Hinterschäumung 14. Nach dem Einfüllen wird die Form schnell geschlossen, so daß der Randabschnitt 6 eine Dichtung bildet, die verhindert, daß das Polyurethanmaterial zur Bildung der Hinterschäumung 14 auf die Außenseite der Haut 12 gelangt. Nach dem Aushärten wird die Form geöffnet und der Formling entnommen. Von diesem Formling werden dann der Randabschnitt 6 und der Rand 15 abgetrennt, die beide lediglich aus einer Materialfamilie, nämlich aus Polyurethan, bestehen. Glasbestandteile enthalten sie nicht.

Wenn in einer geschlossenen Form hinterschäumt wird, wird die Form vorher verschlossen und das Material zur Bildung der Hinterschäumung 14 durch einen nicht gezeigten Kanal eingeführt. Auch in diesem Fall bildet der Randabschnitt 6 die entsprechende Dichtung.

Grundsätzlich ist es möglich, vor dem Ausschäumen und Tränken des Trägers die Glasfasermatte nicht nur paßgenau zuzuschneiden, sondern auch alle Durchbrüche auszuschneiden, die das fertige Produkt aufweisen soll. Diese Öffnungen können dann beim Ausschäumen des Trägers wieder mit Polyurethan geschlossen werden, um zum Hinterschäumen einen geschlossenen Träger anzuliefern.

Die geschlossene Oberfläche des Trägers verhindert ein Durchtreten des Poylurethan-Schaumes auf die Rückseite des Trägers und damit die Verschmutzung der Träger-Rückseite durch Schaum, so daß eine Reinigung nicht erforderlich ist. Da eine fertige Armaturentafel aber immer Durchbrüche im Trägerbereich hat, z.B. Handschuhkasten-Öffnung, Defroster-Düsen, Durchbrüche, Radio-Lautsprecher-Öffnungen etc., werden diese Öffnungen nach dem Schäumen analog dem Randbeschnitt dargestellt.

## Patentansprüche

1. Verfahren zur Herstellung von Kraftfahrzeug-Innenverkleidungen o. dgl. mit einer Haut aus Polyurethanmaterial und einem glasfasermattenverstärkten Polyurethanträger, die gemeinsam in einer Form hinterschäumt werden, gekennzeichnet durch folgende Verfahrensschritte:

a) getrenntes Herstellen des Trägers (4) aus einer im Verhältnis zur fertigen Innenverkleidung kontur- und maßgenau geschnittenen Glasfasermatte durch Tränken mit Polyurethanmaterial mit einem überstehenden Randabschnitt (6) nur aus diesem Polyurethanmaterial;

b) Einlegen der Haut (12) in die Unterform (11) mit einem überstehenden Rand (15) in der Trennebene (16);

c) Einlegen des getrennt hergestellten Trägers in die Oberform mit dem nur aus Polyurethanmaterial hergestellten Randabschnitt in der Trennebene;

d) Hinterschäumen von Träger (4) und Haut (12) durch Einfüllen des Polyurethanmaterials in die offene Form;

e) Schließen der Form, wobei der Randabschnitt (6) des getrennt hergestellten Trägers in der Trennebene (16) in Kontakt mit der Haut eine Dichtung bildet;

f) Öffnen der Form und Entnehmen des Formlings.

2. Verfahren zur Herstellung von Kraftfahrzeug-Innenverkleidungen o. dgl. mit einer Haut aus Polyurethanmaterial und einem glasfasermattenverstärkten Polyurethanträger, die gemeinsam in einer Form hinterschäumt werden, gekennzeichnet durch folgende Verfahrensschritte:

a) getrenntes Herstellen des Trägers (4) aus einer im Verhältnis zur fertigen Innenverkleidung kontur- und maßgenau geschnittenen Glasfasermatte durch Tränken mit Polyurethanmaterial mit einem überstehenden Randabschnitt (6) nur aus diesem Polyurethanmaterial;

b) Einlegen der Haut (12) in die Unterform (11) mit einem überstehenden Rand (15) in der Trennebene (16);

c) Einlegen des getrennt hergestellten Trägers in die Oberform mit dem nur aus Polyurethanmaterial hergestellten Randabschnitt in der Trennebene;

d) Schließen der Form, wobei der Randabschnitt (6) des getrennt hergestellten Trägers in der Trennebene (16) in Kontakt mit der Haut eine Dichtung bildet;

e) Hinterschäumen des Trägers (4) und der Haut (12) durch einfüllen des Polyurethanmaterials in die geschlossene Form;

f) Öffnen der Form und Entnehmen des Formlings.

**FIG.1**

**FIG.2**